# EUROPÄISCHE PATENTSCHRIFT

(11) **EP 0 865 812 B1**
(45) Veröffentlichungstag und Bekanntmachung des Hinweises auf die Patenterteilung: **13.08.2003**
(21) Anmeldenummer: 98104723.6
(22) Anmeldetag: 16.03.1998
(51) Int. Cl.: B01D 21/00, B01D 17/02

(54) **Bausatz für den Zusammenbau von Abscheidern für Leicht- und/oder Sinkstoffe**
Construction set for assembling separators for light and/or heavy liquids
Ensemble pour l'assemblage de séparateurs de liquides légers et/ou lourds

(30) Priorität: 17.03.1997 DE 29704838 U
(43) Veröffentlichungstag der Anmeldung: 23.09.1998
(73) Patentinhaber: ACO Severin Ahlmann GmbH & Co. KG, 24755 Rendsburg (DE)
(72) Erfinder: Helffenstein, Elke, 65558 Flacht (DE); Hickl, Herbert, 65322 Aarbergen (DE)
(74) Vertreter: Bohnenberger, Johannes, Dr.

(56) Entgegenhaltungen:
- EP-A- 0 495 386
- DE-A- 3 331 001
- DE-A- 4 330 552

## Beschreibung

Die Erfindung betrifft einen Bausatz zur Erstellung von Abscheidern für die Abscheidung von Leichtstoffen und/oder Sinkstoffen aus Abwasser.

Aus DE 89 08 679 U1 ist ein Leichtstoffabscheider von im wesentlichen liegend zylindrischer Form bekannt, dessen Gehäuse aus Komponenten, nämlich zwei Endstücken, einem Mittelteil sowie Strömungsleitwände aufweisenden Zwischenstücken zusammengesetzt ist, deren ringförmige Ränder abdichtend ineinandergreifen und durch Spanneinrichtungen zusammengehalten sind. Durch Verwendung unterschiedlich langer Mittelteile können Abscheider mit unterschiedlicher Nenngröße zusammengebaut werden.

Aus DE 40 35 130 C2 ist ein Abscheider von ebenfalls liegend zylindrischer Form bekannt, dessen Gehäuse aus zwei Endstücken und einem oder mehreren Mittelteilen zusammengesetzt ist, wobei die Gehäuseteile radiale Flansche aufweisen, die von Spannringen umgriffen und gegeneinander verspannt werden.

Bei diesen vorbekannten Abscheidern hat die aus Komponenten oder Sektionen zusammengesetzte Bauform den Zweck, unter Verwendung standardisierter Teile Abscheider mit unterschiedlicher Nenngröße zusammenbauen zu können. Die Funktionsweise des Abscheiders bleibt aber hiervon unberührt.

Die Schwerkraftabtrennung von im Abwasser mitgeführten Leicht- und/oder Sinkstoffen stellt je nach der Art des Abwassers und der in ihm mitgeführten Stoffe unterschiedliche Anforderungen. Beispielsweise müssen bei manchen Abscheidern gleichzeitig sowohl Leichtstoffe als auch Sinkstoffe abgeschieden werden, während in anderen Fällen, bei dem Abscheider ein Schlammfang vogeschaltet ist, die Sinkstoffabscheidung entfällt. Die Entnahme der abgeschiedenen Leichtstoffe stellt unterschiedliche Anforderungen, je nachdem ob es sich um leichtflüssige Stoffe, wie Öl oder Benzin, oder um zu Erstarrung neigende Leichtstoffe wie Fett handelt. Für den Abzug der abgetrennten Leichtstoffe Und/oder Sinkstoffe kann der Abscheider eigene Entsorgungsanschlüsse aufweisen. In anderen Fällen erfolgt die Entsorgung durch Leerpumpen des Abscheiders in eine Entsorgungsfahrzeug, wobei der Entsorgungsschlauch durch einen geöffneten Deckel des Abscheidergehäuses eingeführt wird. Um diesen verschiedenen Anforderungen und Funktionen gerecht zu werden, sind eine Vielzahl verschiedener Abscheidertypen und -formen auf dem Markt.

Die DE 33 31 001 A1 zeigt einen Bausatz, mittels dessen Abscheider aufbaubar sind. Dazu werden Deckel-, Boden- und Mittelabschnittsteile aus dünnem Blech gefertigt und in diese Teile werden dann Zusatzteile, insbesondere spezielle Einbauten, die auf einzelne Funktionen des Abscheidens abgestimmt sind, eingebaut. So wird beispielsweise ein Bogenelement in den Deckel eingebaut, wobei das Bogenelement eine Zuleitungsstelle herstellt. Ebenfalls wird bei der Montage in den Behälterraum zentral ein Rohr eingeführt, welches mittig eine siebartige Platte fasst. Nachteilig ist dabei, dass der Einbau der Zusatzteile gesondert und nachträglich nach Erstellung des Gesamtbehälters und nach dessen Einbau in den Boden erfolgt. Dieser Einbau muss dabei unter die erschwerenden Bedingungen auf der Baustelle erfolgen, wo es sehr schwierig und zeitaufwendig ist, solche Einbauten vorzunehmen.

Der Erfindung liegt die Aufgabe zugrunde, die durch die an sich bekannte Sektionsbauweise von Abscheidern gegebenen Möglichkeiten dahingehend zu erweitern, dass unter Verwendung eines Bausatzes aus standardisierten Komponenten Abscheider mit unterschiedlicher Funktionsweise und für unterschiedliche Anwendungszwecke zusammengestellt werden können.

Die erfindungsgemäße Lösung der Aufgabe ist im Anspruch 1 angegeben.

Eine Ausführungsform der Erfindung wird anhand der Zeichnungen näher erläutert. Es zeigt
- Fig. 1: einen schematischen Vertikalschnitt durch einen Leicht- und Sinkstoffabscheider,
- Fig. 2: schematische Schnittdarstellungen von möglichen Komponenten des erfindungsgemäßen Bausatzes.

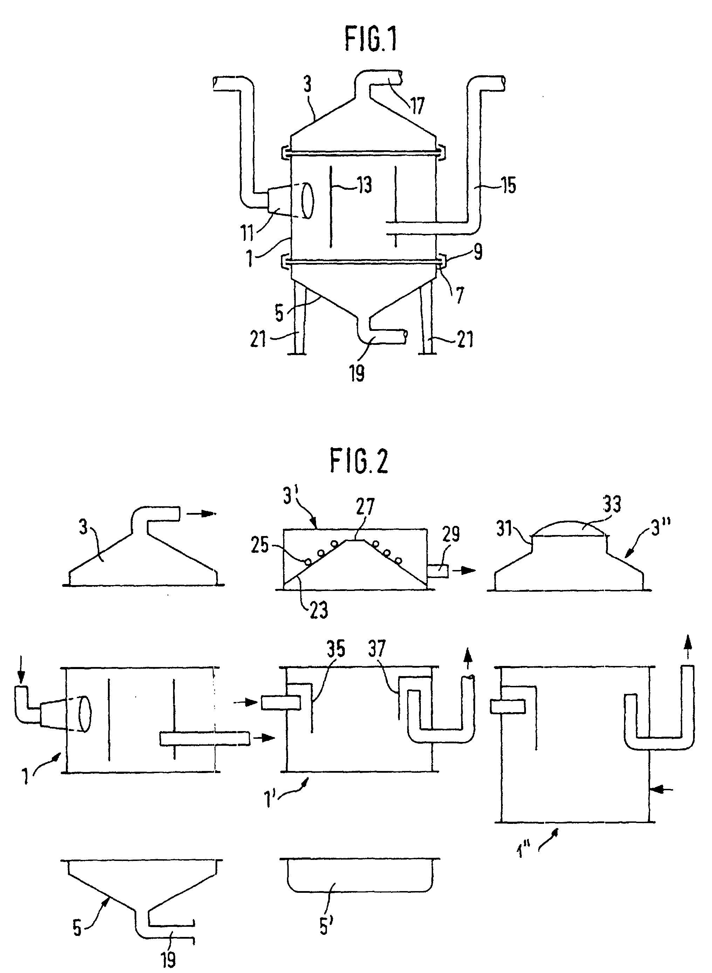

Der in Fig. 1 dargestellte Abscheider zum Abscheiden von Leichtstoffen (Öl, Benzin, Fett und dgl.) und Sinkstoffen (Schlamm) hat im wesentlichen eine rotationssymmetrische Bauform mit lotrechter Achse und besteht aus einem Mittelteil 1, einem Deckelteil 3 und einem Bodenteil 5. Die Teile 1, 3 und 5 haben an den jeweils einander zugewandten Enden nach außen abstehende Flansche 7, die unter Zwischenfügung von Dichtungen (nicht dargestellt) aufeinandergelegt. werden und durch sie umgreifende Spannringe 9 gegeneinander abdichtend verspannt werden. Für die Einzelheiten einer solchen Verklammerung der Gehäuseteile mittels Spannringen wird auf die bereits genannte DE 40 35 130 C2 verwiesen.

Die Gehäuseteile 1, 3, 5 des Abscheiders sind entsprechend der ihnen jeweils zugeordneten Funktion gestaltet. Das Mittelteil 1 hat eine Zuleitung 11 für das zu reinigende Abwasser, die bei dem dargestellten Beispiel mit tangentialer Komponente an das Mittelteil 1 angeschlossen ist, um in diesem eine Kreisströmung zu erzeugen, die durch entsprechende, z. B. spiralförmige Leitwände 13 unterstützt werden kann. Ferner ist am Mittelteil 1 die Abzugsleitung 15 für das gereinigte Wasser angeschlossen, die auf eine entsprechende Höhe hochgezogen ist, um einen erforderlichen hydrostatischen Druck im Abscheider zu erzeugen.

Das Deckelteil 3 ist konisch ausgebildet und dient als Sammelraum für die sich abscheidende Leichtstoffschicht. Die Leichtstoffe werden dabei durch die konische Form des Deckelteils 3 räumlich konzentriert und an der Spitze des Deckelteils über einen Leichtstoffabzug 17 entnommen, z. B. unter Ausnutzung des im Abscheider herrschenden hydrostatischen Drucks.

Das Bodenteil 5 ist als Sammelzone für die sich absetzenden Sinkstoffe, d. h. als Schlammsumpf ausgebildet und hat in Anpassung an diese Funktion ebenfalls eine konische Form mit einem Schlammabzug 19. Der gesamte Abscheider kann z. B. auf Stützen 21 aufgestellt sein. Die Darstellung gemäß Fig. 1 ist nur rein schematisch zu verstehen, und zahlreiche, für den Betrieb des Abscheiders wichtige Elemente, wie z. B. Absperrorgane in den verschiedenen Zu- und Ableitungen, sind weggelassen.

Fig. 2 zeigt schematisch einige mögliche Komponenten eines Bausatzes, wobei durch Auswahl der jeweiligen Komponenten Abscheider der in Fig. 1 dargestellten Bauform für unterschiedliche Anwendungszwecke zusammengestellt werden können.

Die obere Reihe von Fig. 2 zeigt unterschiedliche Formen des Deckelteils. Links ist das Deckelteil 3 von Fig. 1 dargestellt, das z. B. bei der Abscheidung von leichtflüssigen Leichtstoffen wie Öl oder Benzin verwendet werden kann. Das in der Mitte dargestellte Deckelteil 3' findet Anwendung, wenn zur Erstarrung neigende Fette abgetrennt und entnommen werden sollen. Das Deckelteil 3' hat eine konische Wandung 23, die mit einer Heizeinrichtung 25 versehen ist, um sich ansammelndes Fett flüssig zu halten. Das Fett kann aufgrund des Dichteunterschiedes zwischen Wasser und Fett über eine Überlaufkante 27 überlaufen und wird durch eine Entsorgungsleitung 29 angezogen, die, falls erforderlich, ebenfalls beheizt sein kann, Das rechts gezeigte Deckelteil 3" hat einen aufgesetzten Dom 31 mit Deckel 33, welcher den Zugang zum Inneren des Abscheiders, z. B. für das Leerpumpen oder für Inspektionszwecke, ermöglicht. Selbstverständlich sind noch weitere Formen von Deckelteilen möglich, die an den jeweiligen Anwendungszweck angepaßt sind, z. B. mit zusätzlichen Einrichtungen zur Verflüssigung, Homogenisierung und/oder Entnahme der abgeschiedenen Leichtstoffe.

Die mittlere Reihe von Fig. 2 zeigt unterschiedliche Formen für das Mittelteil des Abscheiders. Links ist das Mittelteil 1 von Fig. 1 dargestellt. Es ist, wie bereits erwähnt, so ausgelegt, daß sich in ihm eine Rotationsströmung des Wassers einstellt. Falls eine solche Rotationsströmung nicht erwünscht ist, kann das in der Mitte dargestellte Mittelteil 1' verwendet werden. Bei ihm ist die Zuleitung 11 für das Abwasser nicht tangential, sondern radial angeschlossen. Abgesehen von zwei Prallwänden 35, 37, die dem Zulauf bzw. den Abzug vorgelagert sind, enthält der Mittelteil 1' keine strömungsleitenden Einbauten. Auf der rechten Seite ist ein Mittelteil 1" dargestellt, welches sich von dem Mittelteil 1' nur durch seine größere Höhe unterscheidet. Durch Wahl zwischen den Mittelteilen 1' und 1" können somit Abscheider unterschiedlicher Nenngröße zusammengestellt werden.

Die untere Reihe von Fig. 2 zeigt zwei mögliche Bauformen des Bodenteils. Links ist das Bodenteil 5 gemäß Fig. 1 mit Schlammabzugsleitung 19 dargestellt. Für den Fall, daß in dem Abscheider keine Sinkstoffabscheidung stattfinden soll, kann das daneben dargestellte Bodenteil 5' mit flachem Boden verwendet werden. Selbstverständlich sind noch weitere Formen des Bodenteils möglich, beispielsweise mit zusätzlichen Einrichtungen für den Schlammaustrag in Form vcn Quellwerken, Vibratoren oder dergleichen.

## Patentansprüche

1. Bausatz für den Zusammenbau von lotrechtachsigen Abscheidern zur Abscheidung von Leichtstoffen und/oder Sinkstoffen aus Abwasser,
wobei der Abscheider im wesentlichen runden Querschnitt hat und aus mindestens einem Mittelteil und Endstücken zusammensetzbar ist, die mit zusammenpassenden Ringflanschen und Spannvorrichtungen zusammenfügbar sind, wobei der Bausatz folgende Komponenten aufweist:
mindestens zwei wahlweise verwendbare Mittelteile (1, 1', 1"), die eine unterschiedliche Anordnung des Zu- und Abflusses und/oder unterschiedliche strömungsleitende Einbauten aufweisen,
mindestens zwei wahlweise verwendbare Deckelteile (3, 3', 3"), die mit unterschiedlichen Einrichtungen zum Sammeln und/oder zum Abzug der abgeschiedenen Leichtstoffe versehen sind, und
mindestens zwei wahlweise verwendbare Bodenteile (5, 5'), von denen mindestens eines als Schlammsumpf (5) mit Schlammabzugsanschluß ausgebildet ist.

2. Verwendung eines Bausatzes nach Anspruch 1 zum Zusammenbau eines Abscheiders zur Abscheidung von Leichtstoffen und/oder Sinkstoffen aus Abwasser.

## Claims

1. A kit for the assembly of vertical-axis separators for the separation of light materials and/or settled materials from waste water,
wherein the separator is of substantially circular cross-section and can be assembled from at least one central part and end sections which can be joined together with matching annular flanges and clamping devices, wherein the kit has the following components:
at least two alternatively usable central parts (1,1',1'') which have a different arrangement of the inflow and outflow and/or different flow-directing components,
at least two alternatively usable cover parts (3,3',3") which are provided with different devices for collecting and/or for discharging separated light materials, and
at least two alternatively usable base parts (5,5'), at least one of which is in the form of a sludge sump (5) with a sludge-discharge connection.

2. Use of a kit according to Claim 1 for the assembly of a separator for separating light materials and/or settled materials from waste water.

## Revendications

1. Ensemble pour l'assemblage de séparateurs à axe vertical pour séparer des liquides légers et/ou des liquides lourds d'effluents liquides, dans lequel le séparateur présente une section transversale essentiellement ronde et peut être constitué d'au moins une pièce centrale et de pièces d'extrémité, qui peuvent être jointes avec des brides annulaires adaptées les unes aux autres et des dispositifs de serrage, l'ensemble présentant les composants suivants : au moins deux pièces centrales (1, 1', 1'') utilisables au choix, qui présentent une disposition différente de l'arrivée et de l'évacuation et/ou divers inserts déflecteurs, au moins deux pièces formant couvercle (3, 3', 3") utilisables au choix, qui sont pourvues de divers dispositifs pour collecter et/ou évacuer les liquides légers séparés, et au moins deux pièces formant fond (5, 5') utilisables au choix dont au moins l'une est conformée en collecteur de boue (5) avec raccord d'évacuation de boue.

2. Utilisation d'un ensemble selon la revendication 1 pour assembler un séparateur pour la séparation de liquides légers et/ou de liquides lourds d'effluents liquides.
